(19) Europäisches Patentamt / European Patent Office / Office européen des brevets

(11) **EP 3 968 242 A1**

(12) **EUROPEAN PATENT APPLICATION**
published in accordance with Art. 153(4) EPC

(43) Date of publication:
**16.03.2022 Bulletin 2022/11**

(21) Application number: **20806680.3**

(22) Date of filing: **30.01.2020**

(51) International Patent Classification (IPC):
**G06N 20/00** (2019.01)    **G06F 17/10** (2006.01)
**G06F 17/16** (2006.01)

(52) Cooperative Patent Classification (CPC):
**G06F 17/10; G06F 17/16; G06N 20/00**

(86) International application number:
**PCT/JP2020/003485**

(87) International publication number:
**WO 2020/230374 (19.11.2020 Gazette 2020/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2019   JP 2019089422**

(71) Applicant: **Sony Group Corporation**
**Tokyo 108-0075 (JP)**

(72) Inventors:
• **NAGAMATSU, Yuji**
**Tokyo 108-0075 (JP)**
• **ISHII, Masaaki**
**Tokyo 108-0075 (JP)**

(74) Representative: **2SPL Patentanwälte PartG mbB**
**Landaubogen 3**
**81373 München (DE)**

(54) **ARITHMETIC OPERATION DEVICE AND ARITHMETIC OPERATION SYSTEM**

(57) To realize a depthwise, pointwise separable convolution (DPSC) operation without increasing a memory size and reduce the number of parameters and the amount of operation in a convolutional layer.

This arithmetic operation device includes a first product-sum operator, a second product-sum operator, and a cumulative unit. The first product-sum operator performs a product-sum operation of input data and a first weight. The second product-sum operator is connected to an output portion of the first product-sum operator, and performs a product-sum operation of the output of the first product-sum operator and a second weight. The cumulative unit sequentially adds the output of the second product-sum operator.

Fig. 4

## Description

[Technical Field]

The present technology relates to an arithmetic operation device. More specifically, the present invention relates to an arithmetic operation device and an arithmetic operation system that perform a convolution operation.

[Background Art]

CNN (Convolutional Neural Network), which is a kind of deep neural network, is widely used mainly in the field of image recognition. This CNN performs convolution operations on an input feature map (including an input image) in a convolutional layer, transmits the operation result to a fully-connected layer in a subsequent stage, performs an operation thereon, and outputs the result from an output layer in the last stage. Spatial Convolution (SC) operations are commonly used in operations in the convolution layer. In this spatial convolution, operations of performing a convolution operation using a kernel on target data at the same position on the input feature map and its peripheral data, and adding all the convolution operation results in a channel direction are performed on the data at all positions. Therefore, in CNN using spatial convolution, the amount of product-sum operation and the amount of parameter data become enormous.
On the other hand, Depthwise, Pointwise Separable Convolution (DPSC) operations have been proposed as an operation method that reduces the amount of operation and the number of parameters as compared with spatial convolution (see, for example, PTL 1). This DPSC performs depthwise convolution on an input feature map and performs pointwise convolution, which is a 1×1 convolution operation, on the generated operation result to generate an output feature map.

[Citation List]

[Patent Literature]

[PTL 1]
U.S. Patent Application Publication No. 2018/0189595

[Summary]

[Technical Problem]

In the above-mentioned conventional technique, the amount of operation and the number of parameters in the convolution layer are reduced using the DPSC operation. However, in this conventional technique, the execution result of depthwise convolution is temporarily stored in an intermediate data buffer, and the execution result is read from the intermediate data buffer to execute pointwise convolution. Therefore, an intermediate data buffer for storing the execution result of depthwise convolution is required, the internal memory size of the LSI increases, and the area cost and power consumption of the LSI increase.
The present technology has been made in view of the above-described problems and an object thereof is to realize DPSC operations without increasing the memory size and to reduce the amount of operation and the number of parameters in a convolution layer.

[Solution to Problem]

The present technology has been made to solve the above-mentioned problems, and a first aspect thereof provides an arithmetic operation device and an arithmetic operation system including: a first product-sum operator that performs a product-sum operation of input data and a first weight; a second product-sum operator that is connected to an output portion of the first product-sum operator to perform a product-sum operation of an output of the first product-sum operator and a second weight; and a cumulative unit that sequentially adds an output of the second product-sum operator. This has an effect that the operation result generated by the first product-sum operator is directly supplied to the second product-sum operator, and the operation result of the second product-sum operator is sequentially added to the cumulative unit.
In the first aspect, the cumulative unit may include: a cumulative buffer that holds a cumulative result; and a cumulative adder that adds the cumulative result held in the cumulative buffer and the output of the second product-sum operator to hold an addition result in the cumulative buffer as a new cumulative result. This has an effect that the operation results of the second product-sum operator are sequentially added and held in the cumulative buffer.

In this first aspect, the first product-sum operator may include: $M \times N$ multipliers that perform multiplications of $M \times N$ (M and N are positive integers) pieces of input data and corresponding $M \times N$ first weights; and an addition unit that adds the outputs of the $M \times N$ multipliers and outputs an addition result to the output portion. In this case, the adder may include an adder that adds the outputs of the $M \times N$ multipliers in parallel. This has an effect that the outputs of $M \times N$ multipliers are added in parallel. In this case, the adder may include $M \times N$ adders connected in series for sequentially adding the outputs of the $M \times N$ multipliers. This has an effect that the outputs of $M \times N$ multipliers are sequentially added.

In this first aspect, the first product-sum operator may include: N multipliers that perform multiplications of $M \times N$ (M and N are positive integers) pieces of input data and corresponding $M \times N$ first weights for N pieces; N second cumulative units that sequentially add the outputs of the first product-sum operator; and an adder that adds the outputs of the N multipliers M times to output an addition result to the output portion. This has an effect that $M \times N$ product-sum operation results are generated by N multipliers.

In this first aspect, the first product-sum operator may include $M \times N$ multipliers that perform multiplications of $M \times N$ (M and N are positive integers) pieces of input data and corresponding $M \times N$ first weights, the cumulative unit may include: a cumulative buffer that holds a cumulative result; a first selector that selects a predetermined output from the outputs of the $M \times N$ multipliers and the output of the cumulative buffer; and an adder that adds the output of the first selector, and the second product-sum operator may include a second selector that selects either the output of the adder or the input data to output the selected one to one of the $M \times N$ multipliers. This has an effect that the multiplier is shared between the first product-sum operator and the second product-sum operator.

In the first aspect, the arithmetic operation device may further include a switch circuit that performs switching so that either the output of the first product-sum operator or the output of the second product-sum operator is supplied to the cumulative unit, in which the cumulative unit may sequentially add either the output of the first product-sum operator or the output of the second product-sum operator. This has an effect that the switch circuit switches between the operation result of the first product-sum operator and the operation result via the second product-sum operator, and the operation result is sequentially added in the cumulative unit.

In the first aspect, the arithmetic operation device may further include an arithmetic control unit that supplies a predetermined value serving as an identity element in the second product-sum operator instead of the second weight when the cumulative unit adds the output of the first product-sum operator. This has an effect that the operation result of the first product-sum operator and the operation result via the second product-sum operator are switched according to the control of the arithmetic control unit, and the operation result is sequentially added in the cumulative unit.

In the first aspect, the input data may be measurement data by a sensor, and the arithmetic operation device may be a neural network accelerator. The input data may be one-dimensional data, and the arithmetic operation device may be a one-dimensional data signal processing device. The input data may be two-dimensional data, and the arithmetic operation device may be a vision processor.

[Brief Description of Drawings]

[Fig. 1]

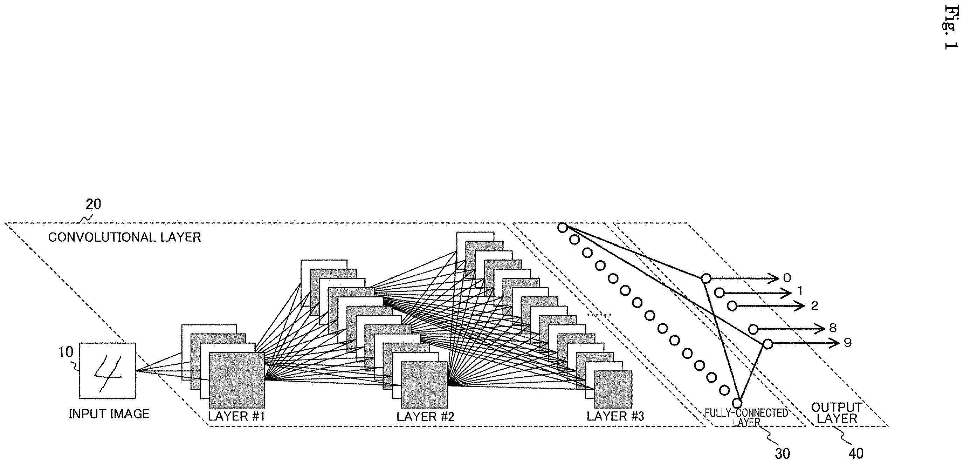

Fig. 1 is an example of an overall configuration of CNN.
[Fig. 2]

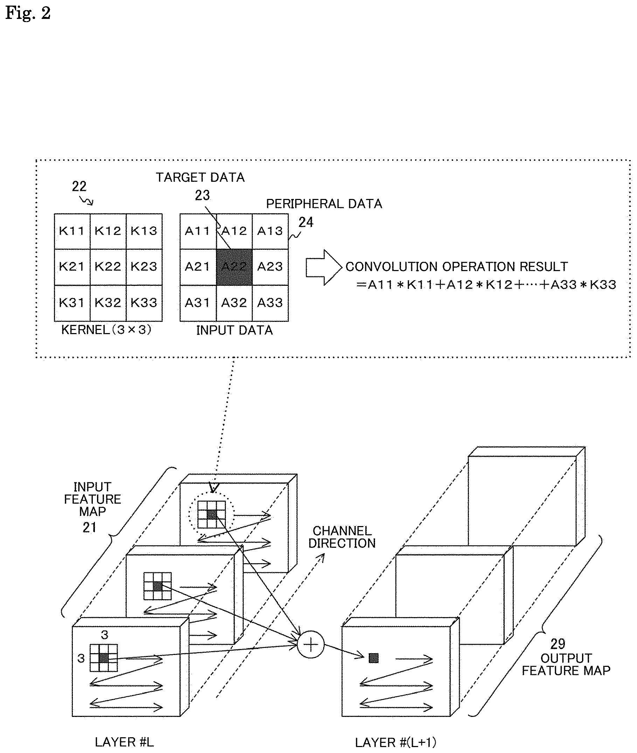

Fig. 2 is a conceptual diagram of a spatial convolution operation in a convolution layer of CNN.
[Fig. 3]

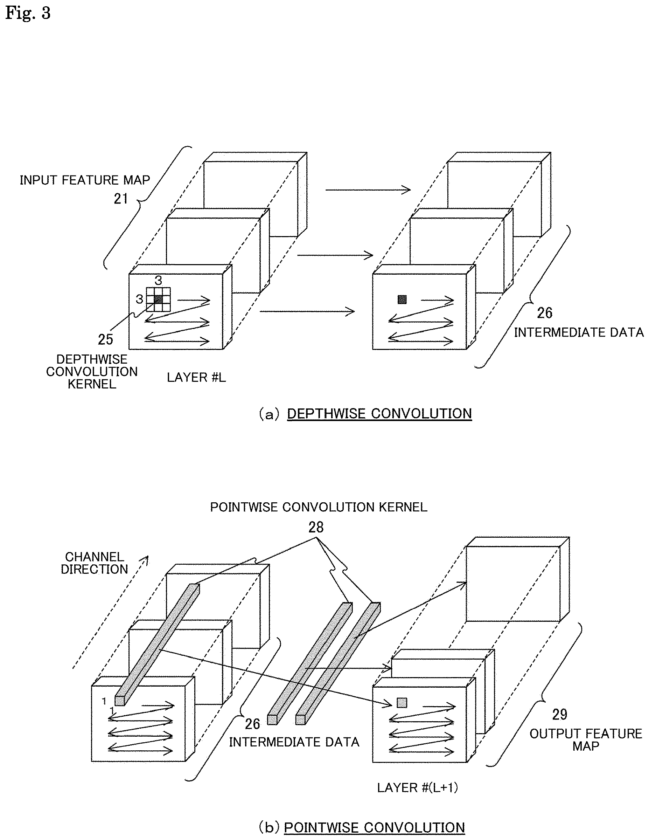

Fig. 3 is a conceptual diagram of a depthwise, pointwise separable convolution operation in a convolution layer of CNN.
[Fig. 4]

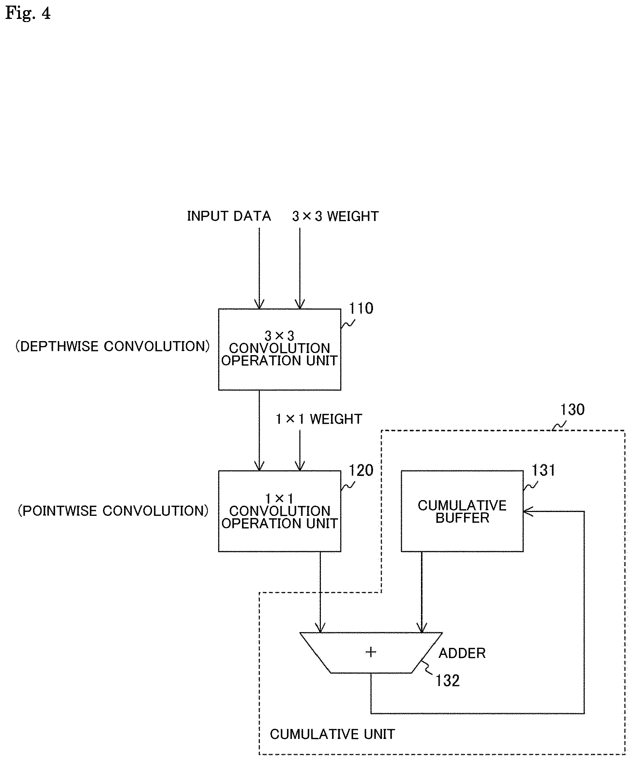

Fig. 4 is a diagram illustrating an example of a basic configuration of a DPSC operation device according to an embodiment of the present technology.
[Fig. 5]

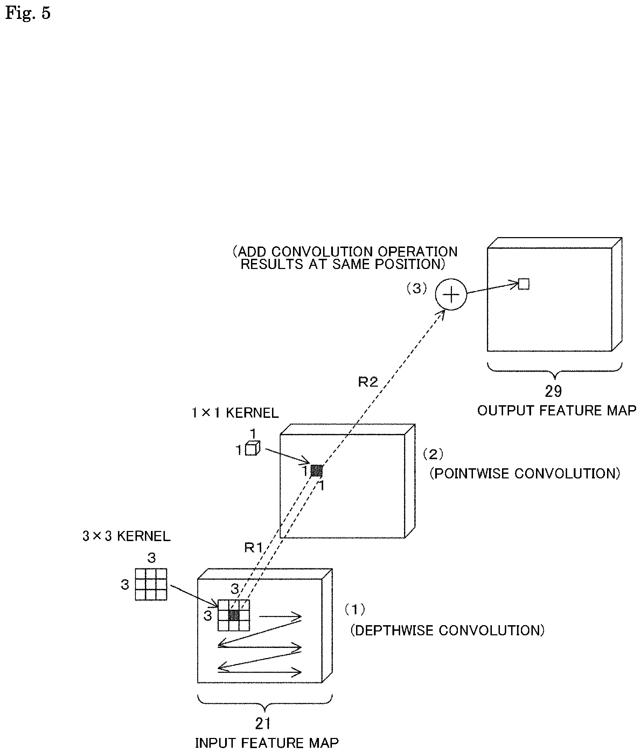

Fig. 5 is a diagram illustrating an example of a DPSC operation for target data 23 in one input feature map 21 according to the embodiment of the present technology.
[Fig. 6]

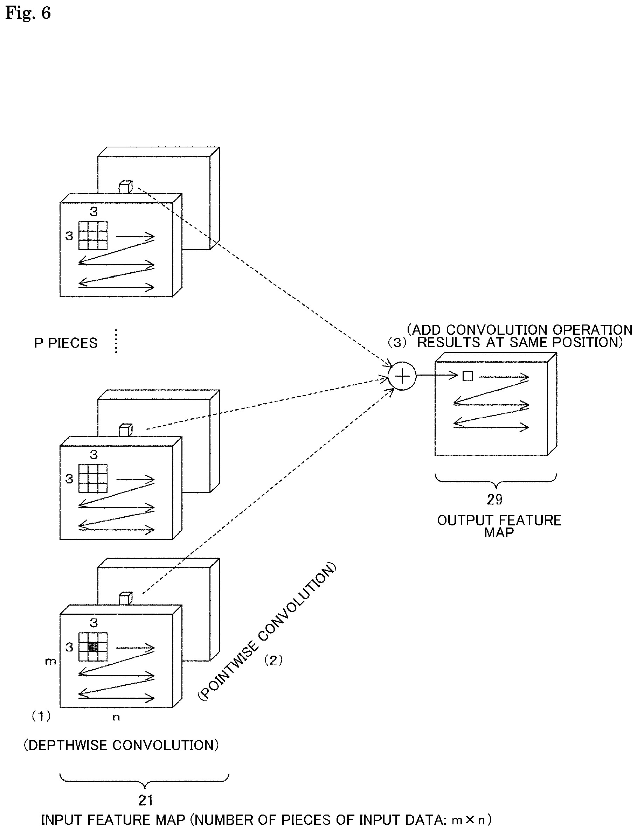

Fig. 6 is a diagram illustrating an example of a DPSC operation for target data 23 in P input feature maps 21 according to the embodiment of the present technology.
[Fig. 7]

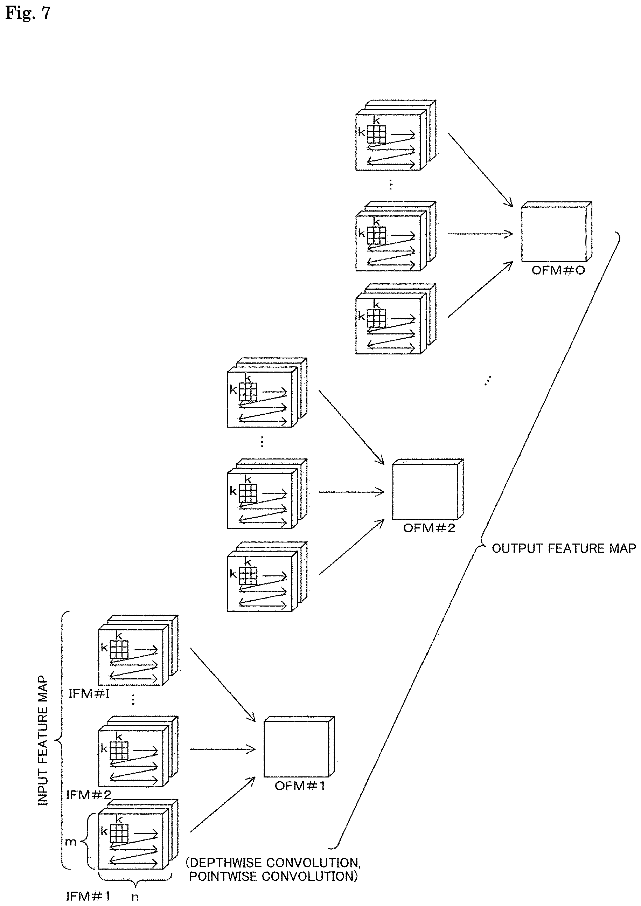

Fig. 7 is a diagram illustrating an example of a DPSC operation between layers according to the embodiment of the present technology.
[Fig. 8]

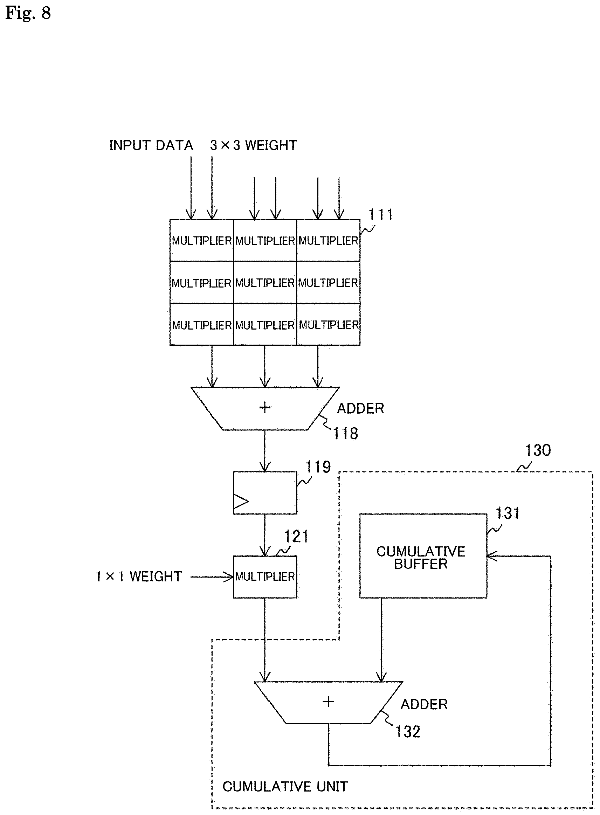

Fig. 8 is a diagram illustrating a first embodiment of a DPSC operation device according to the embodiment of the present technology.

[Fig. 9]

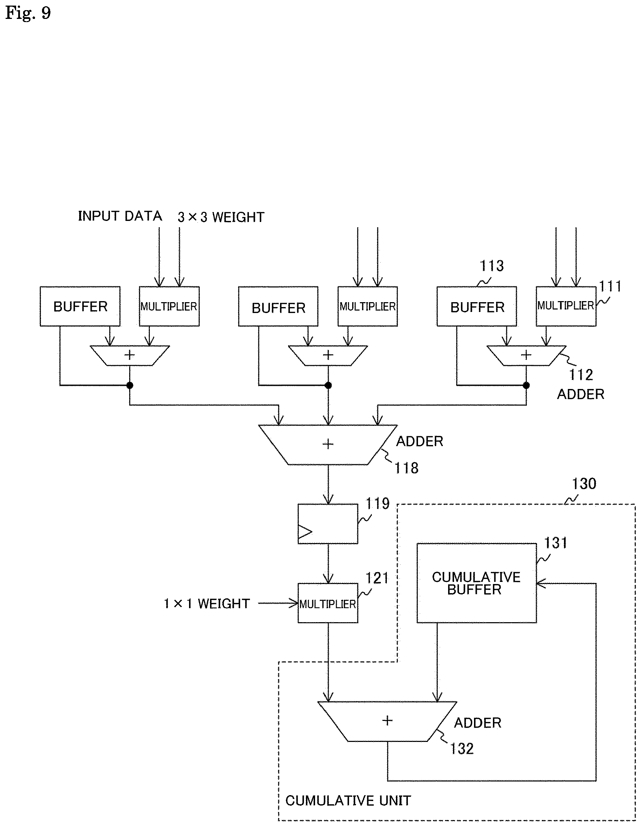

Fig. 9 is a diagram illustrating a second example of the DPSC operation device according to the embodiment of the present technology.

[Fig. 10]

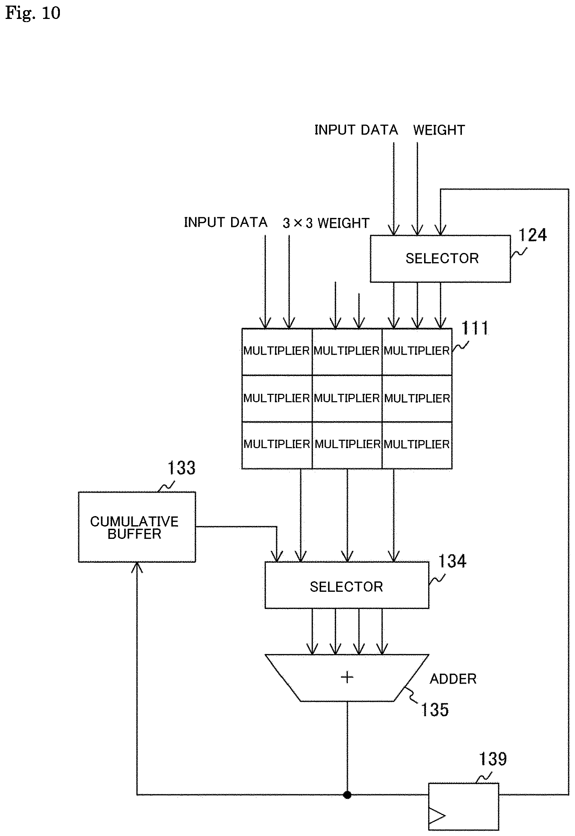

Fig. 10 is a diagram illustrating a third example of the DPSC operation device according to the embodiment of the present technology.

[Fig. 11]

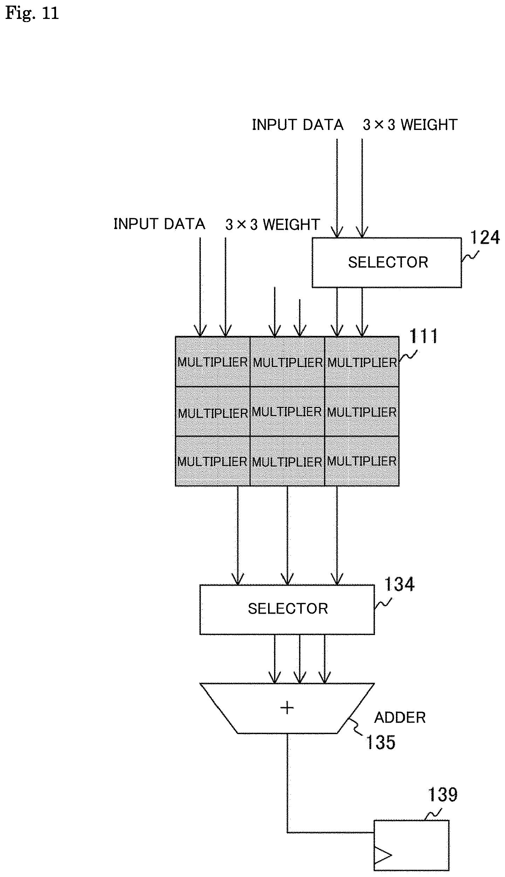

Fig. 11 is a diagram illustrating an operation example during depthwise convolution in the third example of the DPSC operation device according to the embodiment of the present technology.

[Fig. 12]

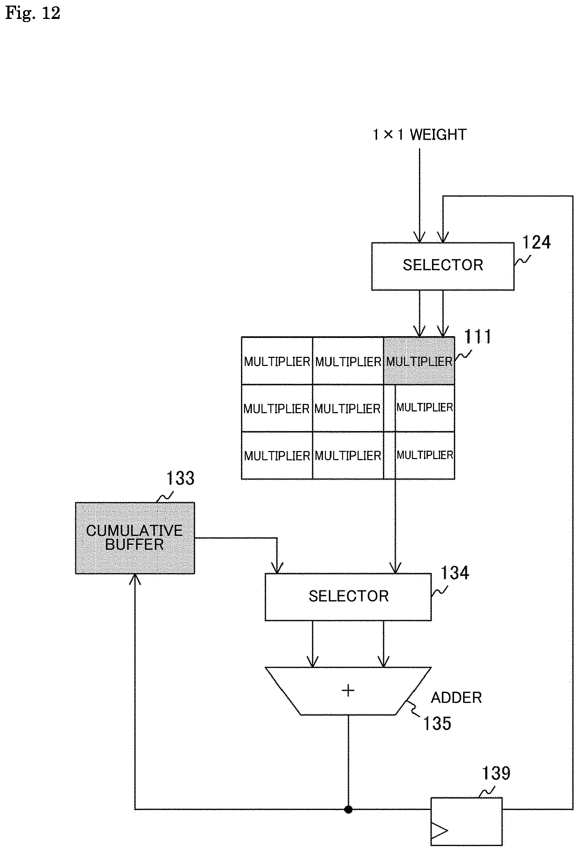

Fig. 12 is a diagram illustrating an operation example during pointwise convolution in the third example of the DPSC operation device according to the embodiment of the present technology.

[Fig. 13]

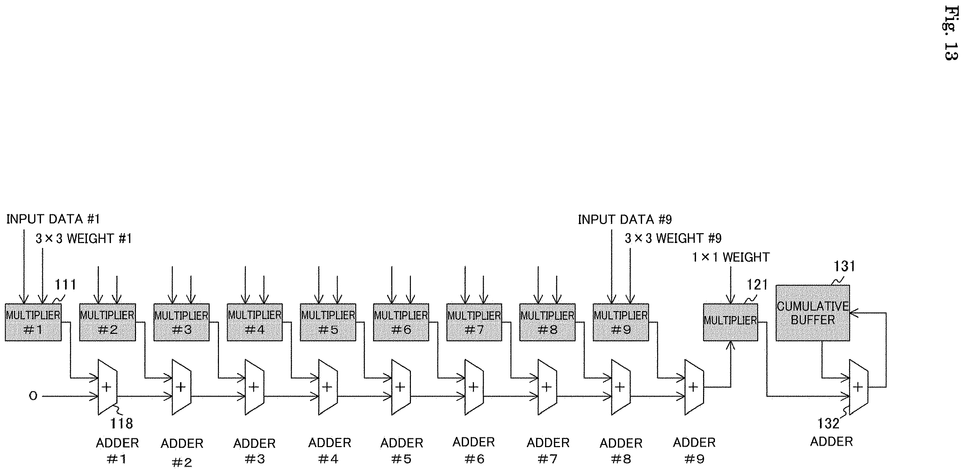

Fig. 13 is a diagram illustrating a fourth example of the DPSC operation device according to the embodiment of the present technology.

[Fig. 14]

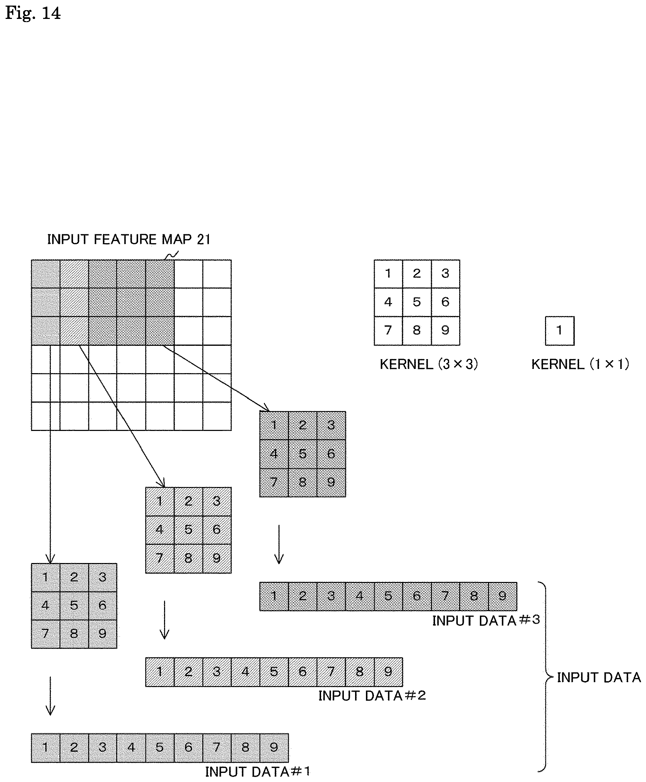

Fig. 14 is a diagram illustrating an example of input data according to an embodiment of the present technology.

[Fig. 15]

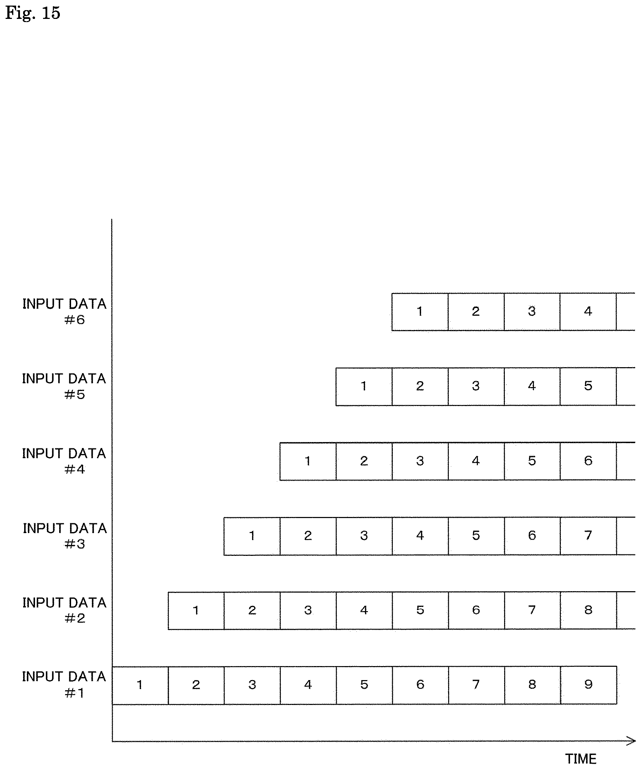

Fig. 15 is a diagram illustrating an operation timing example of a fourth example of the DPSC operation device according to the embodiment of the present technology.

[Fig. 16]

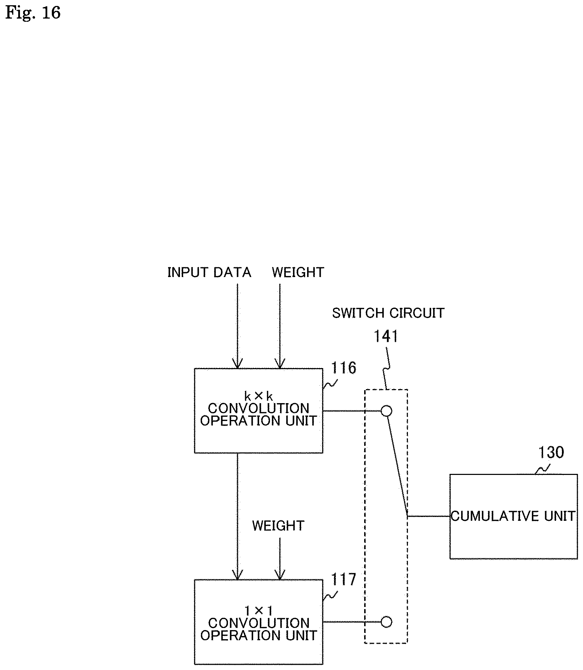

Fig. 16 is a diagram illustrating a first configuration example of an arithmetic operation device according to a second embodiment of the present technology.

[Fig. 17]

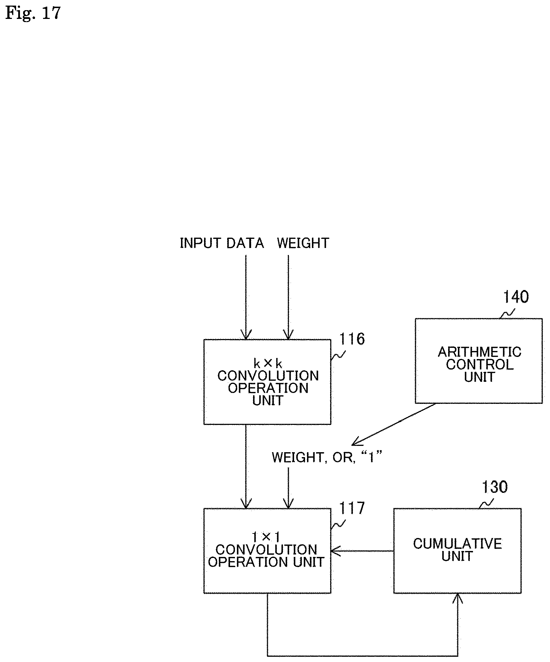

Fig. 17 is a diagram illustrating a second configuration example of an arithmetic operation device according to the second embodiment of the present technology.

[Fig. 18]

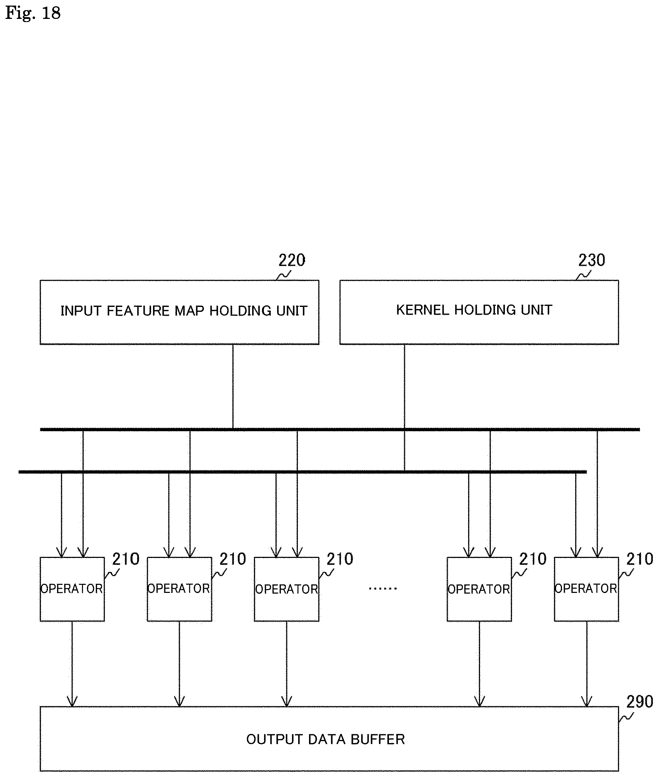

Fig. 18 is a diagram illustrating a configuration example of a parallel arithmetic operation device using the arithmetic operation device according to the embodiment of the present technology.

[Fig. 19]

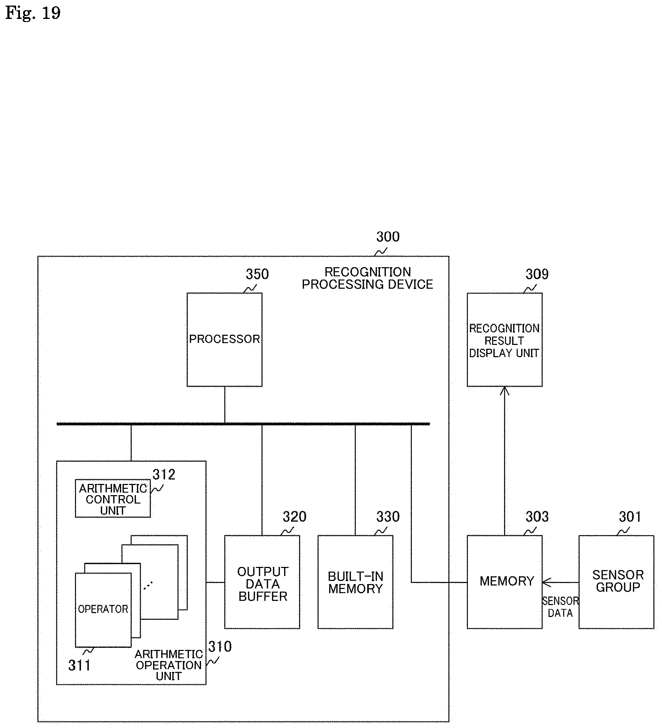

Fig. 19 is a diagram illustrating a configuration example of a recognition processing device using an arithmetic operation device according to an embodiment of the present technology.

[Fig. 20]

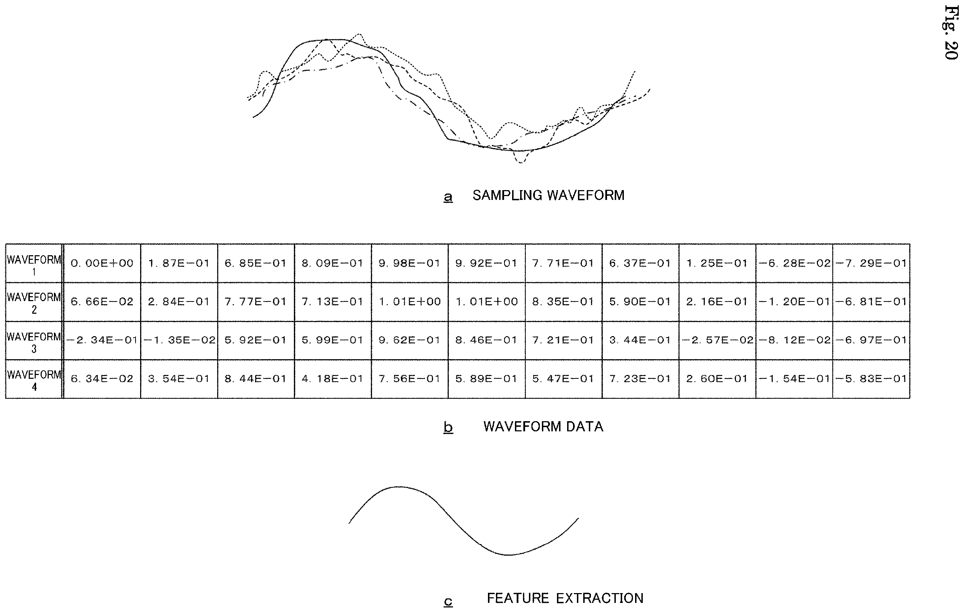

Fig. 20 is a diagram illustrating a first application example of one-dimensional data in an arithmetic operation device according to an embodiment of the present technology.

[Fig. 21]

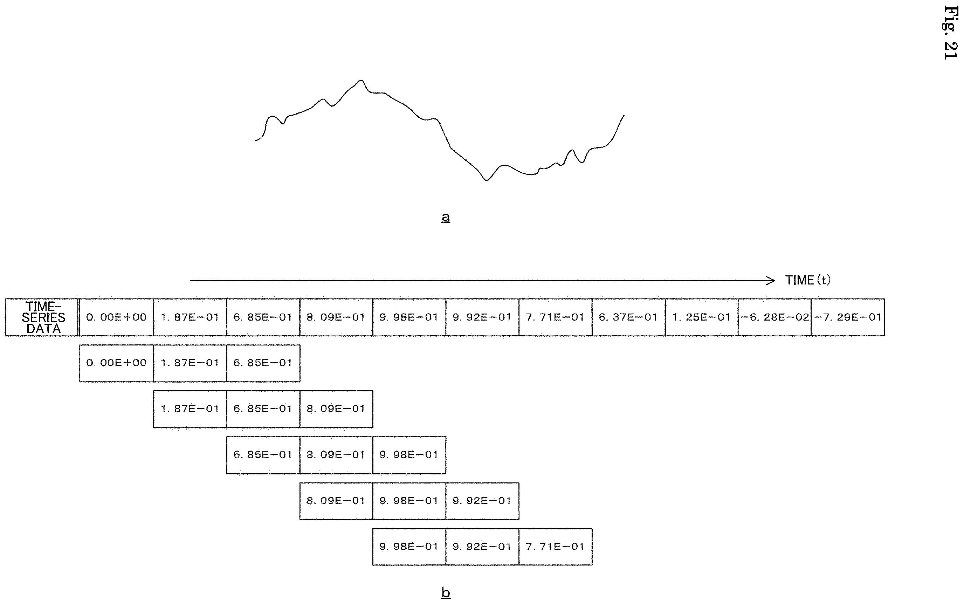

Fig. 21 is a diagram illustrating a second application example of one-dimensional data in the arithmetic operation device according to the embodiment of the present technology.

[Description of Embodiments]

Hereinafter, modes for carrying out the present technology (hereinafter referred to as embodiments) will be described. The explanation will be given in the following order.

    1. First Embodiment (example of performing DPSC operation)
    2. Second Embodiment (example of switching between DPSC operation and SC operation)
    3. Application Example

<1. First Embodiment>

[CNN]

Fig. 1 is an example of an overall configuration of CNN. This CNN is a kind of deep neural network, and includes a convolutional layer 20, a fully-connected layer 30, and an output layer 40.

The convolution layer 20 is a layer for extracting the feature value of an input image 10. The convolution layer 20 has a plurality of layers, and receives the input image 10 and sequentially performs a convolution operation process in each layer. The fully-connected layer 30 combines the operation results of the convolution layer 20 into one node and generates feature variables converted by an activation function. The output layer 40 classifies the feature variables generated by the fully-connected layer 30.

For example, in the case of object recognition, a recognition target image is input after learning 100 labeled objects. At this time, the output corresponding to each label of the output layer indicates the matching probability of the input image.

Fig. 2 is a conceptual diagram of a spatial convolution operation in a convolution layer of CNN.

In the spatial convolution (SC) operation commonly used in the convolution layer of CNN, a convolution operation is performed on target data 23 at the same position on an Input Feature Map (IFM) 21 at a certain layer #L (L is a positive integer) and its peripheral data 24 using a kernel 22. For example, it is assumed that the kernel 22 has a kernel size of $3\times3$, and the respective values are K11 to K33. Further, each value of the input data corresponding to the kernel 22 is set to A11 to A33. At this time, a product-sum operation of the following equation is performed as the convolution operation.

$$\text{Convolution operation result} = A11{\times}K11{+}A12{\times}K12{+}...{+}A33{\times}K33$$

After that, all the convolution operation results are added in the channel direction. As a result, the data at the same position of the next layer #(L+1) is obtained.

By performing these operations on the data at all positions, one Output Feature Map (OFM) is generated. Then, these operations are repeated by changing the kernel by the number of output feature maps.

As described above, in the CNN using the spatial convolution, the amount of product-sum operation and the amount of parameter data become enormous. Therefore, as described above, the following depthwise, pointwise separable convolution (DPSC) operations are used.

Fig. 3 is a conceptual diagram of a depthwise, pointwise separable convolution operation in the convolution layer of CNN.

In this depthwise, pointwise separable convolution (DPSC) operation, as illustrated in "a" in the drawing, Depthwise Convolution is performed on the input feature map 21 to generate intermediate data 26. Then, as illustrated in "b" in the drawing, pointwise convolution, which is a $1\times1$ convolution operation, is performed on the generated intermediate data 26 using the pointwise convolution kernel 28, and an output feature map 29 is generated.

In the depthwise convolution, a convolution operation is performed on one input feature map 21 using a depthwise convolution kernel 25 (having a kernel size of $3\times3$ in this example) to generate one piece of intermediate data 26. This is executed for all input feature maps 21.

In pointwise convolution, a convolution operation having a kernel size of $1\times1$ is performed on the data at a certain position in the intermediate data 26. This convolution is performed for the same position of all pieces of the intermediate data 26, and all the convolution operation results are added in the channel direction. By performing these operations for the data at all positions, one output feature map 29 is generated. The above-described processing is repeatedly executed by changing the $1\times1$ kernel by the number of output feature maps 29.

[Basic Configuration]

Fig. 4 is a diagram illustrating an example of the basic configuration of the DPSC operation device according to the embodiment of the present technology.

This DPSC operation device includes a $3\times3$ convolution operation unit 110, a $1\times1$ convolution operation unit 120, and a cumulative unit 130. In the following example, it is assumed that the depthwise convolution kernel 25 has a kernel size of $3\times3$, but in general, it may have any size of $M\times N$ (M and N are positive integers).

The $3\times3$ convolution operation unit 110 performs a depthwise convolution operation. The $3\times3$ convolution operation unit 110 performs a convolution operation whose depthwise convolution kernel 25 is "$3\times3$ weight" on the "input data" of the input feature map 21. That is, a product-sum operation of the input data and the $3\times3$ weight is performed.

The $1\times1$ convolution operation unit 120 performs a pointwise convolution operation. The $1\times1$ convolution operation unit 120 performs a convolution operation whose pointwise convolution kernel 28 is a "$1\times1$ weight" on the output of the $3\times3$ convolution operation unit 110. That is, a product-sum operation of the output of the $3\times3$ convolution operation unit 110 and the $1\times1$ weight is performed.

The cumulative unit 130 sequentially adds the outputs of the $1\times1$ convolution operation unit 120. The cumulative unit 130 includes a cumulative buffer 131 and an adder 132. The cumulative buffer 131 is a buffer (Accumulation Buffer) that holds the addition result by the adder 132. The adder 132 is an adder that adds the value held in the cumulative buffer 131 and the output of the $1\times1$ convolution operation unit 120 and holds the addition result in the cumulative buffer 131. Therefore, the cumulative buffer 131 holds the cumulative sum of the outputs of the $1\times1$ convolution operation unit 120.

Here, the output of the 3×3 convolution operation unit 110 is directly connected to one input of the 1×1 convolution operation unit 120. That is, in the meantime, there is no need for such a large-capacity intermediate data buffer that holds matrix data. However, as in the example described later, a flip-flop or the like that holds a single piece of data may be inserted mainly for timing adjustment.

Fig. 5 is a diagram illustrating an example of a DPSC operation for the target data 23 in one input feature map 21 according to the embodiment of the present technology.

Focusing on the single piece of data (target data 23) in one input feature map 21, this DPSC operation device performs the operation according to the following procedure.

(a) Depthwise convolution by the 3×3 convolution operation unit 110

$$R1 \leftarrow A11{\times}K11+A12{\times}K12+...+A33{\times}K33$$

(b) Pointwise convolution by the 1×1 convolution operation unit 120 (K11: weight) R2 ← R1×K11
(c) Cumulative addition by cumulative unit 130 (AB: contents held in the cumulative buffer 131)

$$AB \leftarrow AB+R2$$

That is, the DPSC operation for the target data 23 in one input feature map 21 is executed by one operation of the DPSC operation device in this embodiment.

Fig. 6 is a diagram illustrating an example of a DPSC operation for the target data 23 in P input feature maps 21 according to the embodiment of the present technology.

Assuming that the number of pieces of data of the input feature map 21 is m×n and the number of input feature maps 21 is P (m, n and P are positive integers), one output feature map 29 is generated by performing the operation of the DPSC operation device in this embodiment by m×n×P times.

Fig. 7 is a diagram illustrating an example of a DPSC operation between layers according to the embodiment of the present technology.

As described above, according to the DPSC operation device according to the embodiment of the present technology, the DPSC operation device can be performed without an intermediate data buffer for storing the result of depthwise convolution. However, as illustrated in this drawing, since it is necessary to repeatedly execute the processing for one output feature map 29 by the number of output feature maps 29, the number of executions of depthwise convolution increases.

[First Example]

Fig. 8 is a diagram illustrating a first example of the DPSC operation device according to the embodiment of the present technology.

In this first example, nine multipliers 111, one adder 118, and a flip-flop 119 are provided as the 3×3 convolution operation unit 110.

Each of the multipliers 111 is a multiplier that multiplies one value of the input data with one value of the 3×3 weight in depthwise convolution. That is, the nine multipliers 111 perform nine multiplications in depthwise convolution in parallel.

The adder 118 is an adder that adds the multiplication results of the nine multipliers 111. This adder 118 generates the product-sum operation result R1 in the depthwise convolution.

The flip-flop 119 holds the product-sum operation result R1 generated by the adder 118. The flip-flop 119 holds a single piece of data mainly for timing adjustment, and does not hold the matrix data together.

In this first example, the multiplier 121 is provided as the 1×1 convolution operation unit 120. The multiplier 121 is a multiplier that multiplies the product-sum operation result R1 generated by the adder 118 with the 1×1 weight K11 in the pointwise convolution.

The cumulative unit 130 is the same as that of the above-described embodiment, and includes a cumulative buffer 131 and an adder 132.

[Second Example]

Fig. 9 is a diagram illustrating a second example of the DPSC operation device according to the embodiment of the present technology.

In this second example, three multipliers 111, three adders 112, three buffers 113, one adder 118, and a flip-flop 119 are provided as the 3×3 convolution operation unit 110. That is, in the first example described above, nine multiplications in the depthwise convolution are executed in parallel by the nine multipliers 111. However, in the second example, nine multiplications in the depthwise convolution are performed in three times by the three multipliers 111. Therefore, the adder 112 and the buffer 113 are provided in each of the multipliers 111, and the multiplication results for three times are cumulatively added.

That is, the buffer 113 is a buffer that holds the addition result by the adder 112. The adder 112 is an adder that adds the value held in the buffer 113 and the output of the multiplier 111 and holds the addition result in the buffer 113. Therefore, the buffer 113 holds the cumulative sum of the outputs of the multiplier 111. The adder 118 and the flip-flop 119 are the same as those in the first example described above.

The point that the multiplier 121 is provided as the 1×1 convolution operation unit 120 is the same as that of the first example described above. The point that the cumulative unit 130 includes the cumulative buffer 131 and the adder 132 is the same as that of the first example described above.

As described above, in this second example, the number of multipliers 111 can be reduced by executing the nine multiplications in the depthwise convolution in three times by the three multipliers 111.

[Third Example]

Fig. 10 is a diagram illustrating a third example of the DPSC operation device according to the embodiment of the present technology.

In this third example, the multiplier required for depthwise convolution and the multiplier required for pointwise convolution are used in combination. That is, in this third example, nine multipliers 111 are shared by the 3×3 convolution operation unit 110 and the 1×1 convolution operation unit 120.

In this third example, the cumulative unit 130 includes a cumulative buffer 133, a selector 134, and an adder 135. As will be described later, the selector 134 selects one of the outputs of the nine multipliers 111 and the values held in the cumulative buffer 133 according to the operating state.

The adder 135 is an adder that adds the values held in the cumulative buffer 133 or the outputs of the selector 134 and holds the addition result in the cumulative buffer 133 according to the operating state. Therefore, the cumulative buffer 133 holds the cumulative sum of the outputs of the selector 134.

The DPSC operation device of the third example further includes a selector 124. As will be described later, the selector 124 selects either input data or a weight according to the operating state.

Fig. 11 is a diagram illustrating an operation example during depthwise convolution in the third example of the DPSC operation device according to the embodiment of the present technology.

During the depthwise convolution, each of the multipliers 111 multiplies one value of the input data with one value of the 3×3 weight in the depthwise convolution. At this time, the selector 124 selects one value of the input data and one value of the 3×3 weight in the depthwise convolution and supplies the selected value to one multiplier 111. Therefore, the arithmetic processing during this depthwise convolution is the same as that of the first example described above.

Fig. 12 is a diagram illustrating an operation example during pointwise convolution in the third example of the DPSC operation device according to the embodiment of the present technology.

During pointwise convolution, the selector 124 selects a 1×1 weight and the output from the adder 135 and supplies the selected values to one multiplier 111. Therefore, the multiplier 111 supplied with the values performs multiplication for pointwise convolution. On the other hand, the other eight multipliers 111 do not operate.

The selector 134 selects the multiplication result of one multiplier 111 and the value held in the cumulative buffer 133 and supplies the selected values to the adder 135. As a result, the adder 135 adds the multiplication result of one multiplier 111 and the value held in the cumulative buffer 133 and holds the addition result in the cumulative buffer 133.

Thus, in this third example, the number of multipliers can be reduced as compared with the first example by sharing one multiplier required for pointwise convolution with the multiplier required for depthwise convolution. However, in this case, the utilization rate of the multiplier 111 during pointwise convolution is reduced to 1/9 as compared with the depthwise convolution.

[Fourth Example]

Fig. 13 is a diagram illustrating a fourth example of the DPSC operation device according to the embodiment of the present technology.

In this fourth example, nine multipliers 111 and nine adders 118 are provided as the 3×3 convolution operation unit 110. Each of the nine multipliers 111 is similar to that of the first example described above in that it multiplies one value of the input data with one value of the 3×3 weight in the depthwise convolution. The nine adders 118 are connected in series, and the output of a certain adder 118 is connected to one input of the next-stage adder 118. However, 0 is supplied to one input of the first-stage adder 118. The output of the multiplier 111 is connected to the other input of the adder 118.

The point that the point that the multiplier 121 is provided as the 1×1 convolution operation unit 120 is the same as that of the first example described above. The point that the cumulative unit 130 includes the cumulative buffer 131 and the adder 132 is the same as that of the first example described above.

Fig. 14 is a diagram illustrating an example of input data in the embodiment of the present technology.

The input feature map 21 is divided into nine pieces corresponding to the kernel size 3×3, and is input to the 3×3 convolution operation unit 110 as input data. At this time, next to 3×3 input data #1, 3×3 input data #2 shifted by one to the right is input. When the right end of the input feature map 21 is reached, the input data is shifted downward by one and the data is input similarly from the left end.

These pieces of input data are processed as follows.

(a) The data of the number 1 of the input data #1 of the input feature map and the data of the kernel number 1 are input to the multiplier #1. The operation result of the multiplier #1 is output from the adder #1.
(b) At the next clock, the data of the number 2 of the input data #1 and the data of the kernel number 2 are calculated by the multiplier #2. The sum of the operation result of the adder #1 and the operation result of the multiplier #2 is output from the adder #2.
(c) By repeating the above operations up to the data of the number 9 of the input data #1, the operation result of the depthwise convolution is output from the adder #9.
(d) At the clock next to (c) above, the multiplier 121 performs a pointwise convolution.
(e) The operation result of the pointwise convolution and the data of the cumulative buffer 131 are added by the adder 132, and the value of the cumulative buffer 131 is updated with the addition result.

By the above operation, the operation result is obtained in the same manner as in the first example described above. Since the fourth example has a pipeline configuration in which adders are connected in series, the multiplier #1 can perform arithmetic processing on the data of the number 1 of the input data #2 during the operation of (b) and perform arithmetic processing on the data of the number 1 of the input data #3 at the next clock. In this way, by sequentially inputting the next input data, the ten multipliers can be utilized at all times. In the above example, the data is processed in the order of the input data numbers 1 to 9, but the same operation result is obtained even if the order is arbitrarily changed.

Fig. 15 is a diagram illustrating an operation timing example of a fourth example of the DPSC operation device according to the embodiment of the present technology.

In this fourth example, the multiplier #1 is used in the first cycle after the start of the convolution operation, and the multipliers #1 and #2 are used in the next cycle. After that, the multipliers used increase to multipliers #3 and #4, the convolution operation result is output from the multiplier 121 in the tenth cycle, and the convolution operation result is output every cycle thereafter. That is, the configuration of this fourth example operates like a one-dimensional systolic array.

Assuming that the input data size is n×m (n and m are positive integers), the number of input feature maps is I, and the number of output feature maps is O, among the total number of cycles required for operation is I×O×n×m+9, the convolution operation results are sequentially output every cycle from 9 cycles after the start of the convolution operation process to the I×O×n×m cycle.

In general CNN, the input data size n×m is large in the front stage of the layer, and I and O are large in the rear stage of the layer, I×O×n×m>>9 is true in a whole network. Therefore, the throughput according to the fourth example can be regarded as almost 1.

On the other hand, in the third example described above, since depthwise convolution is performed and pointwise convolution is performed in the next cycle, the convolution operation result is output every two cycles. That is, the throughput is 0.5.

Therefore, according to the fourth example, it is possible to improve the utilization rate of the operator in the entire operation, and obtain twice the throughput as compared with the third example described above.

As described above, in the first embodiment of the present technology, the result of the depthwise convolution by the 3×3 convolution operation unit 110 is supplied to the 1×1 convolution operation unit 120 for pointwise convolution without going through the intermediate data buffer. As a result, the DPSC operation can be executed without using the intermediate data buffer, and the amount of operation and the number of parameters in the convolution layer can be reduced.

That is, according to the first embodiment of the present technology, the cost can be reduced by eliminating the intermediate data buffer and thereby reducing the chip size. In the first embodiment of the present technology, since an intermediate data buffer is not required, and operations can be executed as long as at most one input feature map is provided, the DPSC operation can be executed without the restrictions of the buffer size even in a large-scale network.

<2. Second Embodiment>

In the first embodiment described above, the DPSC operation in the convolution layer 20 is assumed, but depending on the network and the layer used, it may be desired to perform the SC operation that is not separated into the depthwise convolution and the pointwise convolution. Therefore, in the second embodiment, an arithmetic operation device that executes both the DPSC operation and the SC operation will be described.

Fig. 16 is a diagram illustrating a first configuration example of the arithmetic operation device according to the second embodiment of the present technology.

The arithmetic operation device of the first configuration example includes a k×k convolution operation unit 116, a 1×1 convolution operation unit 117, a switch circuit 141, and a cumulative unit 130.

The k×k convolution operation unit 116 performs a k×k (k is a positive integer) convolution operation. Input data is supplied to one input of the k×k convolution operation unit 116 and a k×k weight is supplied to the other input. The k×k convolution operation unit 116 can be regarded as an arithmetic circuit that performs an SC operation. On the other hand, the k×k convolution operation unit 116 can also be regarded as an arithmetic circuit that performs depthwise convolution in the DPSC operation.

The 1×1 convolution operation unit 117 performs a 1×1 convolution operation. The 1×1 convolution operation unit 117 is an arithmetic circuit that performs pointwise convolution in the DPSC operation, and corresponds to the 1×1 convolution operation unit 120 in the above-described first embodiment. The output of the k×k convolution operation unit 116 is supplied to one input of the 1×1 convolution operation unit 117, and a 1×1 weight is supplied to the other input.

The switch circuit 141 is a switch connected to either the output of the k×k convolution operation unit 116 or the output of the 1×1 convolution operation unit 117. When connected to the output of the k×k convolution operation unit 116, the result of the SC operation is output to the cumulative unit 130. On the other hand, when connected to the output of the 1×1 convolution operation unit 117, the result of the DPSC operation is output to the cumulative unit 130.

The cumulative unit 130 has the same configuration as that of the first embodiment described above, and sequentially adds the outputs of the switch circuit 141. As a result, the result of either the DPSC operation or the SC operation is cumulatively added to the cumulative unit 130.

Fig. 17 is a diagram illustrating a second configuration example of the arithmetic operation device according to the second embodiment of the present technology.

In the first configuration example described above, the switch circuit 141 for switching the connection destination to the cumulative unit 130 is required. On the other hand, in this second configuration example, one input of the 1×1 convolution operation unit 117 is set to either the 1×1 weight or the value " 1" by the control of an arithmetic control unit 140. When the 1×1 weight is input, the output of the 1×1 convolution operation unit 117 is the result of the DPSC operation. When the value "1" is input, since the 1×1 convolution operation unit 117 outputs the output of the k×k convolution operation unit 116 as it is, the result of the SC operation is output. As described above, in the second example, by controlling the weighting coefficient by the arithmetic control unit 140, it is possible to realize the same function as that of the first example described above without providing the switch circuit 141.

In this embodiment, it is assumed that the value "1" is input in order to output the output of the k×k convolution operation unit 116 as it is from the 1×1 convolution operation unit 117, but other values may be used as long as the output of the k×k convolution operation unit 116 can be output as it is. That is, a predetermined value serving as an identity element in the 1×1 convolution operation unit 117 can be used.

As described above, according to the second embodiment of the present technology, the results of the DPSC operation and the SC operation can be selected as needed. As a result, it can be used for various networks of CNN. Moreover, both SC operation and DPSC operation can be carried out in any layer in the network. Even in this case, the DPSC operation can be executed without providing the intermediate data buffer.

<3. Application Example>

[Parallel Arithmetic Operation Device]

Fig. 18 is a diagram illustrating a configuration example of a parallel arithmetic operation device using the arithmetic operation device according to the embodiment of the present technology.

This parallel arithmetic operation device includes a plurality of operators 210, an input feature map holding unit 220, a kernel holding unit 230, and an output data buffer 290.

Each of the plurality of operators 210 is an arithmetic operation device according to the above-described embodiment. That is, this parallel arithmetic operation device is configured by arranging a plurality of arithmetic operation devices according to the above-described embodiment as the operators 210 in parallel.

The input feature map holding unit 220 holds the input feature map and supplies the data of the input feature map to each of the plurality of operators 210 as input data.

The kernel holding unit 230 holds the kernel used for the convolution operation and supplies the kernel to each of the plurality of operators 210.

The output data buffer 290 is a buffer that holds the operation results output from each of the plurality of operators 210.

Each of the operators 210 performs operations on one piece of data (for example, data for one pixel) of the input feature map in one operation. By arranging the operators 210 in parallel and performing the operations at the same time, the whole operation can be completed in a short time.

[Recognition Processing Device]

Fig. 19 is a diagram illustrating a configuration example of a recognition processing device using the arithmetic operation device according to the embodiment of the present technology.

This recognition processing device 300 is a vision processor that performs image recognition processing, and includes an arithmetic operation unit 310, an output data buffer 320, a built-in memory 330, and a processor 350.

The arithmetic operation unit 310 performs a convolution operation necessary for the recognition process, and includes a plurality of operators 311 and an arithmetic control unit 312, as in the parallel arithmetic operation device described above. The output data buffer 320 is a buffer that holds the operation results output from each of the plurality of operators 311. The built-in memory 330 is a memory that holds data necessary for operations. The processor 350 is a controller that controls the entire recognition processing device 300.

Further, a sensor group 301, a memory 303, and a recognition result display unit 309 are provided outside the recognition processing device 300. The sensor group 301 is a sensor for acquiring sensor data (measurement data) to be recognized. As the sensor group 301, for example, a sound sensor (microphone), an image sensor, or the like is used. The memory 303 is a memory that holds the sensor data from the sensor group 301, the weight parameters used in the convolution operation, and the like. The recognition result display unit 309 displays the recognition result by the recognition processing device 300.

When the sensor data is acquired by the sensor group 301, the sensor data is loaded into the memory 303 and loaded into the built-in memory 330 together with the weight parameters and the like. It is also possible to load data directly from the memory 303 into the arithmetic operation unit 310 without going through the built-in memory 330.

The processor 350 controls the loading of data from the memory 303 to the built-in memory 330, the execution command of the convolution operation to the operation unit 310, and the like. The arithmetic control unit 312 is a unit that controls the convolution operation process. As a result, the convolution operation result of the operation unit 310 is stored in the output data buffer 320, and is used for the next convolution operation, data transfer to the memory 303 after the completion of the convolution operation, and the like. After all the operations are completed, the data is stored in the memory 303, and for example, the kind of voice data corresponding to the collected sound data is output to the recognition result display unit 309.

In order to reduce the capacity of the cumulative buffer 131, a configuration in which the result of depthwise convolution is stored in the memory 303 is also conceivable. However, it is to be noted that since access to the memory outside the chip is generally slower than access to the buffer inside the chip and consumes a large amount of power.

[Application Example of One-Dimensional Data]

The arithmetic operation device according to the embodiment of the present technology can be used for various targets not only for image data but also for, for example, data in which one-dimensional data is arranged two-dimensionally. That is, the arithmetic operation device in this embodiment may be a one-dimensional data signal processing device. For example, waveform data having a certain periodicity in which the phases are aligned may be arranged two-dimensionally. In this way, characteristics of the waveform shape may be learned by deep learning or the like. That is, the range of utilization of the embodiment of the present technology is not limited to the field of images.

Fig. 20 is a diagram illustrating a first application example of one-dimensional data in the arithmetic operation device according to the embodiment of the present technology.

In this first application example, as illustrated in "a" in the drawing, a plurality of sampling waveforms whose phases are aligned will be considered. Each waveform is one-dimensional time-series data, the horizontal direction indicates the time direction, and vertical direction indicates the magnitude of the signal.

As illustrated in "b" in the drawing, when the data values of these waveforms for each time are arranged vertically, they can be represented as two-dimensional data. By performing the arithmetic processing according to the embodiment of the present technology with respect to the two-dimensional data, features common to respective waveforms can be extracted. As a result, the feature extraction result as illustrated in "c" in the drawing can be obtained.

Fig. 21 is a diagram illustrating a second application example of one-dimensional data in the arithmetic.

In this second application example, as illustrated in "a" in the drawing, one waveform will be considered. This waveform is one-dimensional time-series data, and the horizontal direction indicates the time direction and the vertical direction indicates the magnitude of the signal.

As illustrated in "b" in the drawing, this waveform can be regarded as data sets of three pieces of data ($1 \times 3$-dimensional data) in chronological order, and DPSC operation can be performed. At that time, the pieces of data included in the neighboring data sets partially overlap.

Here, an example of $1 \times 3$-dimensional data has been described, but it can generally be applied to $1 \times n$-dimensional data (n is a positive integer). Further, even for data having three or more dimensions, a portion of the data can be regarded as two-dimensional data and DPSC operation can be performed. That is, the embodiments of the present technology are adaptable to data of various dimensions.

The recognition process has been described in the above-described embodiments, but the embodiments of the present technology may be used as a part of a neural network for learning. That is, the arithmetic operation device according to the embodiments of the present technology may perform inference processing and learning processing as a neural network accelerator. Therefore, the present technology is suitable for products containing artificial intelligence.

The embodiments described above each describe an example for embodying the present technology, and matters in the embodiments and matters specifying the invention in the claims have correspondence relationships. Similarly, the matters specifying the invention in the claims and the matters in the embodiments of the present technology denoted by the same names have correspondence relationships. However, the present technology is not limited to the embodiments, and can be embodied by subjecting the embodiments to various modifications without departing from the gist thereof.

The processing procedures described in the above embodiment may be considered as a method including a series of these procedures or may be considered as a program to cause a computer to execute a series of these procedures or a recording medium storing the program. As this recording medium, for example, a compact disc (CD), a MiniDisc (MD), a digital versatile disc (DVD), a memory card, or a Blu-ray (registered trademark) disc can be used.

The effects described in the specification are merely examples, and the effects of the present technology are not limited to them and may include other effects.

The present technology can also be configured as described below.

(1) An arithmetic operation device including: a first product-sum operator that performs a product-sum operation of input data and a first weight; a second product-sum operator that is connected to an output portion of the first product-sum operator to perform a product-sum operation of an output of the first product-sum operator and a second weight; and a cumulative unit that sequentially adds an output of the second product-sum operator.

(2) The arithmetic operation device according to (1), in which the cumulative unit includes: a cumulative buffer that holds a cumulative result; and a cumulative adder that adds the cumulative result held in the cumulative buffer and the output of the second product-sum operator to hold an addition result in the cumulative buffer as a new cumulative result.

(3) The arithmetic operation device according to (1) or (2), in which the first product-sum operator includes: $M \times N$ multipliers that perform multiplications of $M \times N$ (M and N are positive integers) pieces of input data and corresponding $M \times N$ first weights; and an addition unit that adds the outputs of the $M \times N$ multipliers and outputs an addition result to the output portion.

(4) The arithmetic operation device according to (3), in which the addition unit includes an adder that adds the outputs of the $M \times N$ multipliers in parallel.

(5) The arithmetic operation device according to (3), in which the addition unit includes $M \times N$ adders connected in series for sequentially adding the outputs of the $M \times N$ multipliers.

(6) The arithmetic operation device according to (1) or (2), in which the first product-sum operator includes: N multipliers that perform multiplications of $M \times N$ (M and N are positive integers) pieces of input data and corresponding $M \times N$ first weights for every N pieces; N second cumulative units that sequentially add the outputs of the first product-sum operator; and an adder that adds the outputs of the N multipliers M times to output an addition result to the output portion.

(7) The arithmetic operation device according to (1) or (2), in which the first product-sum operator includes $M \times N$ multipliers that perform multiplications of $M \times N$ (M and N are positive integers) pieces of input data and corresponding $M \times N$ first weights, the cumulative unit includes: a cumulative buffer that holds a cumulative result; a first selector that selects a predetermined output from the outputs of the $M \times N$ multipliers and the output of the cumulative buffer; and an adder that adds the output of the first selector, and the second product-sum operator includes a second selector that selects either the output of the adder or the input data to output the selected one to one of the $M \times N$ multipliers.

(8) The arithmetic operation device according to any one of (1) to (7), further including: a switch circuit that performs switching so that either the output of the first product-sum operator or the output of the second product-sum operator is supplied to the cumulative unit, in which the cumulative unit sequentially adds either the output of the first product-sum operator or the output of the second product-sum operator.

(9) The arithmetic operation device according to any one of (1) to (7), further including: an arithmetic control unit that supplies a predetermined value serving as an identity element in the second product-sum operator instead of the second weight when the cumulative unit adds the output of the first product-sum operator.

(10) The arithmetic operation device according to any one of (1) to (9), in which the input data is measurement data by a sensor, and the arithmetic operation device is a neural network accelerator.

(11) The arithmetic operation device according to any one of (1) to (9), in which the input data is one-dimensional data, and the arithmetic operation device is a one-dimensional data signal processing device.

(12) The arithmetic operation device according to any one of (1) to (9), in which the input data is two-dimensional data, and the arithmetic operation device is a vision processor.

(13) An arithmetic operation system including: a plurality of arithmetic operation devices, each including a first product-sum operator that performs a product-sum operation of input data and a first weight, a second product-sum operator that is connected to an output portion of the first product-sum operator to perform a product-sum operation of an output of the first product-sum operator and a second weight, and a cumulative unit that sequentially adds an output of the second product-sum operator; an input data supply unit that supplies the input data to the plurality of arithmetic operation devices; a weight supply unit that supplies the first and second weights to the plurality of arithmetic operation devices; and an output data buffer that holds the outputs of the plurality of arithmetic operation devices.

[Reference Signs List]

| | |
|---|---|
| 110 | 3×3 Convolution operation unit |
| 111 | Multiplier |
| 112, 118 | Adder |
| 113 | Buffer |
| 116 | k×k Convolution operation unit |
| 117 | 1×1 Convolution operation unit |
| 119 | Flip-flop |
| 120 | 1×1 Convolution operation unit |
| 121 | Multiplier |
| 124 | Selector |
| 130 | Cumulative unit |
| 131, 133 | Cumulative buffer |
| 132, 135 | Adder |
| 134 | Selector |
| 140 | Arithmetic control unit |
| 141 | Switch circuit |
| 210 | Operator |
| 220 | Input feature map holding unit |
| 230 | Kernel holding unit |
| 290 | Output data buffer |
| 300 | Recognition processing device |
| 301 | Sensor group |
| 303 | Memory |
| 309 | Recognition result display unit |
| 310 | Arithmetic operation unit |
| 311 | Operator |
| 312 | Arithmetic control unit |
| 320 | Output data buffer |
| 330 | Built-in memory |
| 350 | Processor |

**Claims**

1. An arithmetic operation device comprising:

   a first product-sum operator that performs a product-sum operation of input data and a first weight;
   a second product-sum operator that is connected to an output portion of the first product-sum operator to perform a product-sum operation of an output of the first product-sum operator and a second weight; and
   a cumulative unit that sequentially adds an output of the second product-sum operator.

2. The arithmetic operation device according to claim 1, wherein the cumulative unit includes:

   a cumulative buffer that holds a cumulative result; and
   a cumulative adder that adds the cumulative result held in the cumulative buffer and the output of the second product-sum operator to hold an addition result in the cumulative buffer as a new cumulative result.

3. The arithmetic operation device according to claim 1, wherein
   the first product-sum operator includes:

   M×N multipliers that perform multiplications of M×N (M and N are positive integers) pieces of input data and corresponding M×N first weights; and
   an addition unit that adds the outputs of the M×N multipliers and outputs an addition result to the output portion.

4. The arithmetic operation device according to claim 3, wherein
   the addition unit includes an adder that adds the outputs of the M×N multipliers in parallel.

5. The arithmetic operation device according to claim 3, wherein
   the addition unit includes M×N adders connected in series for sequentially adding the outputs of the M×N multipliers.

6. The arithmetic operation device according to claim 1, wherein
   the first product-sum operator includes:

   N multipliers that perform multiplications of M×N (M and N are positive integers) pieces of input data and corresponding M×N first weights for every N pieces;
   N second cumulative units that sequentially add the outputs of the first product-sum operator; and
   an adder that adds the outputs of the N multipliers M times to output an addition result to the output portion.

7. The arithmetic operation device according to claim 1, wherein

   the first product-sum operator includes M×N multipliers that perform multiplications of M×N (M and N are positive integers) pieces of input data and corresponding M×N first weights,
   the cumulative unit includes:

   a cumulative buffer that holds a cumulative result;
   a first selector that selects a predetermined output from the outputs of the M×N multipliers and the output of the cumulative buffer; and
   an adder that adds the output of the first selector, and
   the second product-sum operator includes a second selector that selects either the output of the adder or the input data to output the selected one to one of the M×N multipliers.

8. The arithmetic operation device according to claim 1, further comprising:

   a switch circuit that performs switching so that either the output of the first product-sum operator or the output of the second product-sum operator is supplied to the cumulative unit, wherein
   the cumulative unit sequentially adds either the output of the first product-sum operator or the output of the second product-sum operator.

9. The arithmetic operation device according to claim 1, further comprising:
   an arithmetic control unit that supplies a predetermined value serving as an identity element in the second product-sum operator instead of the second weight when the cumulative unit adds the output of the first product-sum operator.

10. The arithmetic operation device according to claim 1, wherein
the input data is measurement data by a sensor, and the arithmetic operation device is a neural network accelerator.

11. The arithmetic operation device according to claim 1, wherein
the input data is one-dimensional data, and the arithmetic operation device is a one-dimensional data signal processing device.

12. The arithmetic operation device according to claim 1, wherein the input data is two-dimensional data, and the arithmetic operation device is a vision processor.

13. An arithmetic operation system comprising:

a plurality of arithmetic operation devices, each comprising a first product-sum operator that performs a product-sum operation of input data and a first weight,
a second product-sum operator that is connected to an output portion of the first product-sum operator to perform a product-sum operation of an output of the first product-sum operator and a second weight, and a cumulative unit that sequentially adds an output of the second product-sum operator;
an input data supply unit that supplies the input data to the plurality of arithmetic operation devices;
a weight supply unit that supplies the first and second weights to the plurality of arithmetic operation devices; and
an output data buffer that holds the outputs of the plurality of arithmetic operation devices.

**Amended claims under Art. 19.1 PCT**

1. An arithmetic operation device comprising:

a first product-sum operator that performs a product-sum operation of input data and a first weight;
a second product-sum operator that is connected to an output portion of the first product-sum operator to perform a product-sum operation of an output of the first product-sum operator and a second weight; and
a cumulative unit that sequentially adds an output of the second product-sum operator.

2. The arithmetic operation device according to claim 1, wherein the cumulative unit includes:

a cumulative buffer that holds a cumulative result; and
a cumulative adder that adds the cumulative result held in the cumulative buffer and the output of the second product-sum operator to hold an addition result in the cumulative buffer as a new cumulative result.

3. The arithmetic operation device according to claim 1, wherein
the first product-sum operator includes:

$M \times N$ multipliers that perform multiplications of $M \times N$ (M and N are positive integers) pieces of input data and corresponding $M \times N$ first weights; and
an addition unit that adds the outputs of the $M \times N$ multipliers and outputs an addition result to the output portion.

4. The arithmetic operation device according to claim 3, wherein
the addition unit includes an adder that adds the outputs of the $M \times N$ multipliers in parallel.

5. The arithmetic operation device according to claim 3, wherein
the addition unit includes $M \times N$ adders connected in series for sequentially adding the outputs of the $M \times N$ multipliers.

6. The arithmetic operation device according to claim 1, wherein
the first product-sum operator includes:

N multipliers that perform multiplications of $M \times N$ (M and N are positive integers) pieces of input data and corresponding $M \times N$ first weights for every N pieces;
N second cumulative units that sequentially add the outputs of the first product-sum operator; and

an adder that adds the outputs of the N multipliers M times to output an addition result to the output portion.

7. The arithmetic operation device according to claim 1, wherein

the first product-sum operator includes M×N multipliers that perform multiplications of M×N (M and N are positive integers) pieces of input data and corresponding M×N first weights,
the cumulative unit includes:

a cumulative buffer that holds a cumulative result;
a first selector that selects a predetermined output from the outputs of the M×N multipliers and the output of the cumulative buffer; and
an adder that adds the output of the first selector, and
the second product-sum operator includes a second selector that selects either the output of the adder or the input data to output the selected one to one of the M×N multipliers.

8. The arithmetic operation device according to claim 1, further comprising:

a switch circuit that performs switching so that either the output of the first product-sum operator or the output of the second product-sum operator is supplied to the cumulative unit, wherein
the cumulative unit sequentially adds either the output of the first product-sum operator or the output of the second product-sum operator.

9. The arithmetic operation device according to claim 1, further comprising:
an arithmetic control unit that supplies a predetermined value serving as an identity element in the second product-sum operator instead of the second weight when the cumulative unit adds the output of the first product-sum operator.

10. The arithmetic operation device according to claim 1, wherein
the input data is measurement data by a sensor, and the arithmetic operation device is a neural network accelerator.

11. The arithmetic operation device according to claim 1, wherein
the input data is one-dimensional data, and the arithmetic operation device is a one-dimensional data signal processing device.

12. The arithmetic operation device according to claim 1, wherein the input data is two-dimensional data, and the arithmetic operation device is a vision processor.

13. An arithmetic operation system comprising:

a plurality of arithmetic operation devices, each comprising a first product-sum operator that performs a product-sum operation of input data and a first weight, a second product-sum operator that is connected to an output portion of the first product-sum operator to perform a product-sum operation of an output of the first product-sum operator and a second weight, and a cumulative unit that sequentially adds an output of the second product-sum operator;
an input data supply unit that supplies the input data to the plurality of arithmetic operation devices;
a weight supply unit that supplies the first and second weights to the plurality of arithmetic operation devices; and
an output data buffer that holds the outputs of the plurality of arithmetic operation devices.

14. (Added) The arithmetic operation device according to claim 1, wherein
the second product-sum operator includes one multiplier that performs a 1×1 product-sum operation between the output of the first product-sum operator and the second weight.

Fig. 1

**Fig. 2**

KERNEL(3×3) — 22

| K11 | K12 | K13 |
| K21 | K22 | K23 |
| K31 | K32 | K33 |

TARGET DATA — 23

PERIPHERAL DATA — 24

INPUT DATA

| A11 | A12 | A13 |
| A21 | A22 | A23 |
| A31 | A32 | A33 |

CONVOLUTION OPERATION RESULT
$= A11*K11+A12*K12+\cdots+A33*K33$

INPUT FEATURE MAP 21

CHANNEL DIRECTION

OUTPUT FEATURE MAP — 29

LAYER #L

LAYER #(L+1)

Fig. 3

INPUT FEATURE MAP
21

3
3
25

DEPTHWISE
CONVOLUTION
KERNEL

LAYER #L

26
INTERMEDIATE DATA

(a) DEPTHWISE CONVOLUTION

POINTWISE CONVOLUTION KERNEL
28

CHANNEL
DIRECTION

1
1

26
INTERMEDIATE DATA

29
OUTPUT FEATURE
MAP

LAYER #(L+1)

(b) POINTWISE CONVOLUTION

Fig. 4

INPUT DATA    3 × 3 WEIGHT

(DEPTHWISE CONVOLUTION)

110

3 × 3
CONVOLUTION
OPERATION UNIT

1 × 1 WEIGHT

130

(POINTWISE CONVOLUTION)

120

1 × 1
CONVOLUTION
OPERATION UNIT

131

CUMULATIVE
BUFFER

+    ADDER

132

CUMULATIVE UNIT

Fig. 5

(ADD CONVOLUTION OPERATION
RESULTS AT SAME POSITION)

(3)

29
OUTPUT FEATURE MAP

R2

1 × 1 KERNEL

1
1

1
1

(2)
(POINTWISE CONVOLUTION)

3 × 3 KERNEL

R1

3
3

3
3

(1)
(DEPTHWISE CONVOLUTION)

21
INPUT FEATURE MAP

Fig. 6

P PIECES

(ADD CONVOLUTION OPERATION
(3) RESULTS AT SAME POSITION)

29
OUTPUT FEATURE
MAP

(POINTWISE CONVOLUTION)
(2)

(1)

(DEPTHWISE CONVOLUTION)

21
INPUT FEATURE MAP (NUMBER OF PIECES OF INPUT DATA: $m \times n$)

Fig. 7

OFM#O

OFM#2

OUTPUT FEATURE MAP

INPUT FEATURE MAP

IFM#I

IFM#2

m

IFM#1    n

OFM#1

(DEPTHWISE CONVOLUTION,
POINTWISE CONVOLUTION)

Fig. 8

INPUT DATA    3 × 3 WEIGHT

| MULTIPLIER | MULTIPLIER | MULTIPLIER |
|---|---|---|
| MULTIPLIER | MULTIPLIER | MULTIPLIER |
| MULTIPLIER | MULTIPLIER | MULTIPLIER |

111

＋    ADDER

118

119

121

1 × 1 WEIGHT ⟶ MULTIPLIER

130

131

CUMULATIVE
BUFFER

＋    ADDER

132

CUMULATIVE UNIT

Fig. 9

Fig. 10

INPUT DATA   WEIGHT

INPUT DATA   3 × 3 WEIGHT

SELECTOR          124

| MULTIPLIER | MULTIPLIER | MULTIPLIER | 111 |
| MULTIPLIER | MULTIPLIER | MULTIPLIER | |
| MULTIPLIER | MULTIPLIER | MULTIPLIER | |

133

CUMULATIVE BUFFER

SELECTOR          134

+          ADDER

135

139

Fig. 11

INPUT DATA    3 × 3 WEIGHT

INPUT DATA    3 × 3 WEIGHT

SELECTOR    124

| MULTIPLIER | MULTIPLIER | MULTIPLIER | 111 |
| MULTIPLIER | MULTIPLIER | MULTIPLIER | |
| MULTIPLIER | MULTIPLIER | MULTIPLIER | |

SELECTOR    134

+    ADDER

135

139

Fig. 12

Fig. 13

Fig. 14

INPUT FEATURE MAP 21

| 1 | 2 | 3 |
|---|---|---|
| 4 | 5 | 6 |
| 7 | 8 | 9 |

KERNEL (3 × 3)

| 1 |
|---|

KERNEL (1 × 1)

| 1 | 2 | 3 |
|---|---|---|
| 4 | 5 | 6 |
| 7 | 8 | 9 |

| 1 | 2 | 3 |
|---|---|---|
| 4 | 5 | 6 |
| 7 | 8 | 9 |

| 1 | 2 | 3 | 4 | 5 | 6 | 7 | 8 | 9 |
|---|---|---|---|---|---|---|---|---|

INPUT DATA #3

| 1 | 2 | 3 |
|---|---|---|
| 4 | 5 | 6 |
| 7 | 8 | 9 |

| 1 | 2 | 3 | 4 | 5 | 6 | 7 | 8 | 9 |
|---|---|---|---|---|---|---|---|---|

INPUT DATA #2

INPUT DATA

| 1 | 2 | 3 | 4 | 5 | 6 | 7 | 8 | 9 |
|---|---|---|---|---|---|---|---|---|

INPUT DATA #1

Fig. 15

Fig. 16

INPUT DATA    WEIGHT

SWITCH CIRCUIT

141

┌─────────────────┐
│  k × k          │  116
│  CONVOLUTION    │
│  OPERATION UNIT │
└─────────────────┘

130

┌──────────────────┐
│ CUMULATIVE UNIT  │
└──────────────────┘

WEIGHT

┌─────────────────┐
│  1 × 1          │  117
│  CONVOLUTION    │
│  OPERATION UNIT │
└─────────────────┘

Fig. 17

INPUT DATA    WEIGHT

140

ARITHMETIC
CONTROL
UNIT

116

k × k
CONVOLUTION
OPERATION
UNIT

WEIGHT, OR, "1"

130

117

1 × 1
CONVOLUTION
OPERATION UNIT

CUMULATIVE
UNIT

Fig. 18

220

INPUT FEATURE MAP HOLDING UNIT

230

KERNEL HOLDING UNIT

210
OPERATOR

210
OPERATOR

210
OPERATOR

· · · · · ·

210
OPERATOR

210
OPERATOR

290

OUTPUT DATA BUFFER

Fig. 19

300
RECOGNITION
PROCESSING DEVICE

350
PROCESSOR

309
RECOGNITION
RESULT
DISPLAY UNIT

312
ARITHMETIC
CONTROL
UNIT

OPERATOR

311

320
OUTPUT
DATA
BUFFER

330
BUILT-IN
MEMORY

303
MEMORY

301
SENSOR
GROUP

SENSOR
DATA

ARITHMETIC 310
OPERATION
UNIT

Fig. 20

EP 3 968 242 A1

<u>a</u>   SAMPLING WAVEFORM

| | | | | | | | | | | |
|---|---|---|---|---|---|---|---|---|---|---|
| WAVEFORM 1 | 0. 00E+00 | 1. 87E−01 | 6. 85E−01 | 8. 09E−01 | 9. 98E−01 | 9. 92E−01 | 7. 71E−01 | 6. 37E−01 | 1. 25E−01 | −6. 28E−02 | −7. 29E−01 |
| WAVEFORM 2 | 6. 66E−02 | 2. 84E−01 | 7. 77E−01 | 7. 13E−01 | 1. 01E+00 | 1. 01E+00 | 8. 35E−01 | 5. 90E−01 | 2. 16E−01 | −1. 20E−01 | −6. 81E−01 |
| WAVEFORM 3 | −2. 34E−01 | −1. 35E−02 | 5. 92E−01 | 5. 99E−01 | 9. 62E−01 | 8. 46E−01 | 7. 21E−01 | 3. 44E−01 | −2. 57E−02 | −8. 12E−02 | −6. 97E−01 |
| WAVEFORM 4 | 6. 34E−02 | 3. 54E−01 | 8. 44E−01 | 4. 18E−01 | 7. 56E−01 | 5. 89E−01 | 5. 47E−01 | 7. 23E−01 | 2. 60E−01 | −1. 54E−01 | −5. 83E−01 |

<u>b</u>   WAVEFORM DATA

<u>c</u>   FEATURE EXTRACTION

Fig. 21

TIME (t)

| TIME-SERIES DATA | 0.00E+00 | 1.87E-01 | 6.85E-01 | 8.09E-01 | 9.98E-01 | 9.92E-01 | 7.71E-01 | 6.37E-01 | 1.25E-01 | -6.28E-02 | -7.29E-01 |

a

| 0.00E+00 | 1.87E-01 | 6.85E-01 |
| 1.87E-01 | 6.85E-01 | 8.09E-01 |
| 6.85E-01 | 8.09E-01 | 9.98E-01 |
| 8.09E-01 | 9.98E-01 | 9.92E-01 |
| 9.98E-01 | 9.92E-01 | 7.71E-01 |

b

## INTERNATIONAL SEARCH REPORT

International application No.

PCT/JP2020/003485

### A. CLASSIFICATION OF SUBJECT MATTER

Int. Cl. G06N20/00(2019.01)i, G06F17/10(2006.01)i, G06F17/16(2006.01)i
FI: G06F17/16 M, G06F17/10 A, G06N20/00 160

According to International Patent Classification (IPC) or to both national classification and IPC

### B. FIELDS SEARCHED

Minimum documentation searched (classification system followed by classification symbols)
Int. Cl. G06F17/10, G06F17/16, G06N20/00

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-79017 A (CANON INC.) 27 April 2017, abstract, paragraphs [0019], [0030]-[0050], fig. 2-4 | 1-13 |
| A | JP 2019-53723 A (GYRFALCON TECHNOLOGY INC.) 04 April 2019, entire text, all drawings | 1-13 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13.04.2020 | 21.04.2020 |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

## INTERNATIONAL SEARCH REPORT
Information on patent family members

| International application No. |
| --- |
| PCT/JP2020/003485 |

| Patent Documents referred to in the Report | Publication Date | Patent Family | Publication Date |
| --- | --- | --- | --- |
| JP 2017-79017 A | 27.04.2017 | US 2017/0116495 A1 abstract, paragraphs [0046], [0054]-[0073], fig. 2-4 | |
| JP 2019-53723 A | 04.04.2019 | US 2018/0189595 A1 entire document | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180189595